# EUROPEAN PATENT APPLICATION

(11) **EP 2 889 768 A1**
(43) Date of publication of application: **01.07.2015**
(21) Application number: 13382561.2
(22) Date of filing: 27.12.2013
(51) Int. Cl.: G06F 9/50, H04W 4/00

(54) **Method, system and device for distributed application execution between electronic devices and cloud**

(71) Applicant: Telefonica Digital, S.L.U., 28013 Madrid (ES)
(72) Inventor: Grunenberger, Yan, 08019 Barcelona (ES)
(74) Representative: Carpintero Lopez, Francisco

(57) **Abstract**

A method system and device for distributed application execution. The system aims to automatically analyze and split application into application blocks to be run in the most appropriate place based on a set of resources optimizations constraints, combined with end user or provider defined set of rules. Each application can be analyzed in separated way and the results of the analysis might be shared with all the parties participating to the application execution optimization scheme. This way, the overhead during the execution is reduced and the resources are spread and shared.

## Description

### Technical field

The present invention relates to the efficient execution of applications between a mobile device and an interconnection of networked system as defined nowadays as cloud. More specifically, it discloses a method, system and device for distributed application execution between a cloud infrastructure and an electronic device (e.g. a mobile phone).

### Background of the invention

As global computer networks, such as the Internet, continue to grow globally at a rapid pace and as mobile devices have everyday more functionalities and offer more complex services, an increasing number of people and businesses from around the world are using mobile devices and accessing these networks for both business and personal activities.

Applications running on mobile devices are getting more and more connected in order to delivery high-value services. In order to do so, most of the times, the mobile devices terminals have to access a cloud infrastructure to be able to deliver such high-value services. Cloud computing or cloud infrastructure is the use of computing resources (hardware and software) that are delivered as a service over a network (typically the Internet). In other words, it refers to services offered over a communication network, from interconnected data centers all over the world, which collectively are referred to as the "cloud." The idea of the "cloud" simplifies the many network connections and computer systems involved in online services. Any user subscribed to the services with an Internet connection can access the cloud and the services it provides. Since these services are often connected, users can share information between multiple systems and with other users. Examples of cloud computing includes online backup services, social networking services, audiovisual content distribution, personal data services... For example, a cloud services provider may make a service, platform or infrastructure from one or more data centers, available to one or more costumers over internet. Generally speaking, cloud services are services that are offered in a way the used infrastructure is transparent to the service user.

So said high-value services, offered by the mobile device imply, most of the times, to have a data connection with the cloud infrastructure. For example, connected/ presence apps (such as Whatsapp, Facebook, Google +, Viber...) require regular but constant use of the data channel in order to persist the user presence into the services. This is primary done by using keep-alive concepts, which on cellular network have tremendous effects on the signaling concept to carry such little added value payload, as well as on the battery life. As developers are free to use any Application Programming Interface (API) to implement their connectivity, there is no way to implement an efficient mechanism on a application basis - the only way to optimize resources usage is to adopt a system wide policy.

In order to provide such optimization, prior work has been following two possible approaches:

A first approach has been to intercept network flow (either at the mobile device level, at the cloud side, or either by the mean of a middle-box on the path of the network packet). While this approach is sustainable if the content of the packet is accessible, it becomes unpractical when the packet are encoded and multiplexed between multiple services, such as the one Google phones are exchanging with Google Cloud servers that contains data about chat, WiFi scan, location and others payload that are tighly joined. With the generalization of protocols as SSL (Secure Sockets Layer), VPN (Virtual Private Networks) technologies, network interception has nearby no more purpose beyond the binary capability of stopping all the flows or none. Optimization process has to take place inside the mobile device.

A second approach to optimization is to relocate resource intensive applications into a better suitable environment - essentially migrating an application from the mobile device to the cloud or to a better fitted device. Some prior works (such as EP2487871) provides this solution by providing three different ways : 1) the application is supporting the migration scheme by itself, which requires adoption of the scheme in the first place, or 2) the application might require the use of specific OS (Operating System) hook or, 3) use Reflections API to access private elements of the system.

The problem of such approach is that it encompasses the entire application states; which is basically cloning the entire memory, storage and current code state fingerprint of the application. This process might be proved difficult to operate, as modern mobile applications tend to be big (due to high resolution screen, such as retina) with a large memory footprint (several megabyte of memory) to be transferred on incapacitated cellular network links, when the coverage start to fail (4G might back off to 3G, that might back off as well as 2G). Such cloning-like process is proven efficient if the bandwidth available and the network conditions are stable and good enough. This is seriously constraining the deployment of such system for on real life cellular based system.

Cloning the entire application is an expensive process for two reasons: first, the application need to enter in a suspended state (a process proved hard for connected applications because: what happen to any data in transit during suspension if one of the parties does not get suspended?). And second, the entire application is being migrated when only some parts of the application are really resource inefficient.

Hence, a more lightweight technique is desired that aim to fix both previous approach at the same time. This new approach should have the capability to understand the application itself. Targeting the execution environment of the mobile device, which is the only point of view usable for this, can do this. This is technically possible due to the way execution is performed on mobile device: as it is mostly executed through a runtime interpreter or using a byte code-based language that is processed on the device itself during the execution. This way, two important tasks can be performed: 1) to understand the application tasks and behavior before any obfuscation or network encryption by third party code; 2) to run only certain part of the code remotely, which avoid migrating or any cloning operations. This way, it can still be used in limited network connectivity and still presenting the same functional properties in disconnected mode with need to re-migrate the application state before using it.

As a side effect, this new approach also makes possible to decompose execution of applications in order to run them in a more controlled way, with rules coming from the different parties, such as users, network providers, service providers. For example, users might want to prioritize battery life over functionality when the battery is getting low (i.e., for example, losing some apps), network providers might want to avoid some heavy traffic at peak hour, and service provider might want to introduce new features on top of existing applications. The fact that the information is handled much before it is encrypted by third parties, makes also the application more transparent and controllable by the user

The embodiments of the invention proposed below will overcome at least some of the prior art drawbacks and will achieve the above mentioned technical advantages.

### SUMMARY

The problems found in prior art techniques are generally solved or circumvented, and technical advantages are generally achieved by the disclosed embodiments which provide a method, system and device for distributed application execution between a cloud infrastructure and a mobile device (in order to optimize the application execution). The system aims to automatically analyze and split application into application blocks to be run in the most appropriate place based on a set of resources optimizations constraints, combined with end user or provider defined set of rules. Thanks to an interceptor combined with an injection module, the rules might be enforced on the end user terminal providing an optimization of existing application execution.

In a first aspect a method is provided for optimizing resources usage during the execution of an application to be used in a mobile device, the mobile device being connected, through a communications link, with a communications network using cloud computing, the method comprising:
a) Analyzing the application code to identify application elements and grouping said application elements in several functional application blocks, each functional application block being able to be executed separately from other functional application blocks,
b) Obtaining a set of rules defining the interactions between the functional application blocks and the resource usage of each application block,
c) Based at least partially on the set of rules, determining a first group of at least one functional application block to be executed by network nodes and a second group of
   at least one functional application block to be executed by the mobile device in order to optimize the resources usage,
d) Executing the application by executing the functional application blocks of the first group in the network nodes and executing the functional application blocks of the second group in the mobile device.

All the application blocks of the first group may be executed in the same network node or the application blocks of the first group may be executed in different network nodes (which may be interconnected between them).

In an embodiment, in step c) the most resource consuming application blocks are assigned to the first group (that is, to be executed in the network).

Steps a) and b) may be performed by a node of the communications network or, alternatively, by the mobile device.

In an embodiment, step d) comprises:
- when, according to the set of rules, the result of the execution of one of the application blocks being executed by a network node is needed as an input for the execution of an application block of the second group, sending said result from the network node to the mobile device through the communications link and
- when, according to the set of rules, the result of the execution of one of the application blocks being executed by the mobile terminal node is needed as an input for the execution of an application block of the first group, sending said result from the mobile device to the communications network (to be delivered to the corresponding network node which is in charge of executing said application block of the first group) through the communications link

Step d) may further comprise: when, according to the set of rules, a certain application block to be executed in the mobile device includes a call to a function (e.g. an API call) which belongs to another application block to be executed in a network node, when executing said certain application block in the mobile device, intercepting said function call and sending said function call to the communications network through the communications link for execution.

Step d) may further comprise: when, according to the set of rules, a certain application block to be executed in a network node includes a call to a function (e.g. an API call) which belongs to another application block to be executed in the mobile device, when executing said certain application block in the network node, intercepting said function call and sending said function call to the mobile device through the communications link for execution.

In an embodiment, an application block of the first group (to be executed in a communications network node) is shared by several mobile devices, each mobile device with a different mobile device user context.

The set of rules may be obtained by executing the application in a simulated environment and the determination in step c) may be also based in rules predefined by a user of the mobile device and/or by a network provider.

The resource usage of each application block may be obtained based on the usage of each resource by any Application Programming Interface, API, used in an application block. The resources may be mobile device resources and/or communications network resources

Said application elements may be at least one of the following: functions, objects and variables used by the application when being executed.

The mobile device may be one of the following: a mobile telephone, a smart phone, an electronic notepad, a personal digital assistant (PDA), a tablet, a laptop or a personal computer.

In a second aspect a system is provided for optimizing resources usage during the execution of an application to be used in a mobile device, the mobile device being connected, through a communications link, with a communications network, the communications network using cloud computing, the system comprising:
a first network-based processor configured to:
   - analyze the application code to identify the application elements,
   - group said application elements in several functional application blocks, each application block being able to be executed separately from other application blocks
   - obtain a set of rules defining the interactions between the application blocks and the resource usage of each application block,
   - based at least partially in the set of rules, determine a first group of at least one application block to be executed in the communications network and a second group of at least one application block to be executed in the mobile device (e.g.in order to optimize the resources usage),
at least a second network-based processor in a second communications network node configured to execute functional application blocks assigned to the first group and
a mobile device comprising a processor configured to execute the functional application blocks assigned to the second group.

In an alternative embodiment, the step of determining the first and second group of applications (to be executed in the communications network and in the mobile device respectively in order to optimize the resources usage) can be performed in the mobile device (by the mobile device processor) instead that by the first network-based processor.

The second network-based processor may be further configured to:
- when, according to the set of rules, a certain application block assigned to the first group includes a call to a function which belongs to another application block of the second group, when executing the certain application block, the second network-based processor is configured to intercept said function call and to send said function call to the mobile device through the communications link for execution,
- when, according to the set of rules, the result of the execution of one of the application blocks of the first group is needed as an input for the execution of an application block of the second group, the second network-based processor is configured to send said result to the mobile device through the communications link,
and the mobile device processor may be further configured to:
- when, according to the set of rules, a certain application block assigned to the second group includes a call to a function which belongs to another application block of the first group, when executing the certain application block in the mobile device, the mobile device processor is configured to intercept said function call and to send said function call to the communications network (to be delivered to the corresponding network node which is in charge of executing said application block of the first group) through the communications link for execution,
- when, according to the set of rules, the result of the execution of one of the application blocks being executed by the mobile device is needed as an input for the execution of an application block of the first group, the mobile device processor is configured to send said result from the mobile device to the communications network (to be delivered to the corresponding network node which is in charge of executing said application block of the first group) through the communications link.

In a further aspect a mobile device is provided for optimizing resources usage during the execution of an application to be used by the mobile device, the mobile device being connected, through a communications link, with a communications network which uses cloud computing, where the application has been divided in several functional applications block, a set of rules defines the interactions between the application blocks and the resource usage of each application block and where, a first group of at least one application block is to be executed in the communications network (in network nodes) and a second group of at least one application block is to be executed in the mobile device, the mobile device comprising:
A processor configured to execute the functional application blocks assigned to the second group and where:
   - when, according to the set of rules, a certain application block assigned to the second group includes a call to a function which belongs to another application block of the first group, when executing the certain application block in the mobile device, the processor is configured to intercept said function call and to send said function call to the communications network (to be delivered to the correspondent network node in charge of executing said application block of the first group) through the communications link for execution,
   - when, according to the set of rules, the result of the execution of one of the application blocks being executed by the mobile device is needed as an input for the execution of an application block of the first group, the processor is configured to send said result from the mobile device to the communications network (to be delivered to the correspondent network node in charge of executing said application block of the first group) through the communications link.

Finally, a computer program comprising computer program code means adapted to perform the above-described methods is presented and a digital data storage medium is also provided encoding a machine-executable program of instructions to perform any of the methods disclosed.

Consequently, according to the invention, a method, system, device and computer program according to the independent claims are provided. Favorable embodiments are defined in the dependent claims.

These and other aspects of the invention will be apparent from and elucidated with reference to the embodiments described hereinafter.

### BRIEF DESCRIPTION OF THE DRAWINGS

Some embodiments of the method and device are now described, by way of example only, and with reference to the accompanying drawings, in which:
Figure 1 shows a block diagram showing two main steps of the application execution optimization process according to an embodiment of the invention.
Figure 2 shows a block diagram of the offline step according to an embodiment of the invention.
Figure 3 shows a block diagram of the offline step applied to a specific example (an e-mail client application) according to an embodiment of the invention.
Figure 4 shows a block diagram of the interactions between application blocks and resources applied to an specific action (receiving an e-mail) in an e-mail client application according to an embodiment of the invention.
Figure 5 shows a block diagram of the interactions between application blocks and resources applied to an specific action (sending an e-mail) in an e-mail client application according to an embodiment of the invention.
Figure 6 shows a block diagram of the interactions between application blocks and resources applied to an specific action (waiting for a new message) in a messaging application according to an embodiment of the invention.
Figure 7 shows a schematic block diagram of the operation of an interception module or engine according to an embodiment of the invention.
Figure 8 shows a schematic block diagram of the multiuser scenario applied to a specific example (a messaging application) according to an embodiment of the invention.

### DESCRIPTION OF EMBODIMENTS

The present embodiments may be embodied in other specific devices, system and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

In the present text, the terms "electronic device", "mobile device", "mobile terminal" and "user equipment" are going to be used indistinctly to refer to the same concept, the communications terminal used by an end user (i.e. a subscriber) of a communications network to communicate over it. This terminal or user equipment may include any device capable of transmitting and receiving data (e.g., voice, text, images, and/or multimedia data) over the communications network. It may refer to a a mobile telephone, a smart phone, an electronic notepad, a personal digital assistant (PDA), a tablet, a laptop, a personal computer...

The present invention provides a method, system and device for distributed application execution between a cloud infrastructure and a mobile device. The system aims to automatically analyze and split application into application blocks to be run in the most appropriate place based on a set of resources optimizations constraints, combined with end user or provider defined set of rules. Each application can be analyzed in separated way and the results of the analysis might be shared with all the parties participating to the application execution optimization scheme. This way, the overhead during the execution is reduced and the resources are spread and shared.

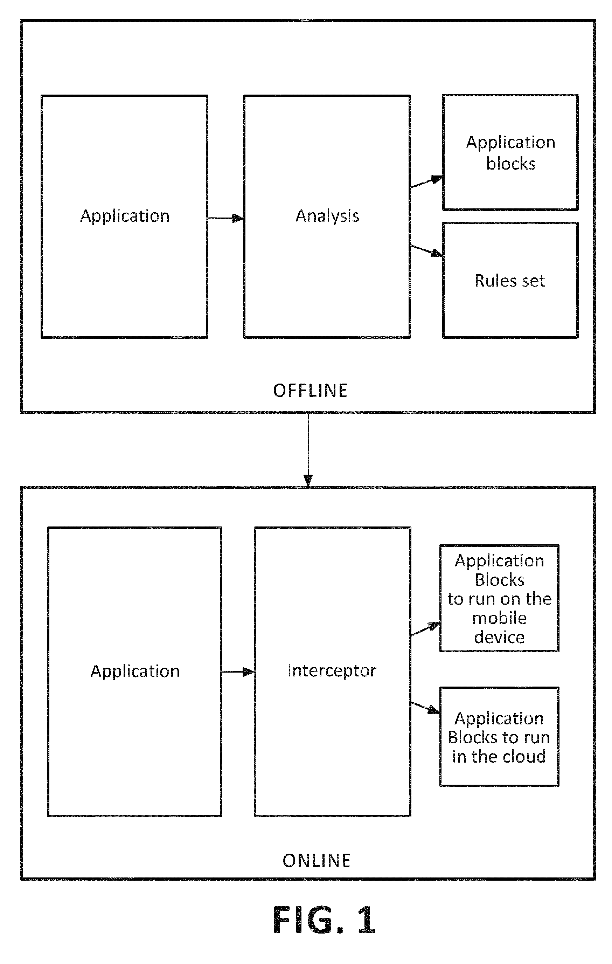

The process, according to an embodiment of the invention, is defined and illustrated as part of Figure 1 which shows the two main steps of the invention (the offline and the online stages).

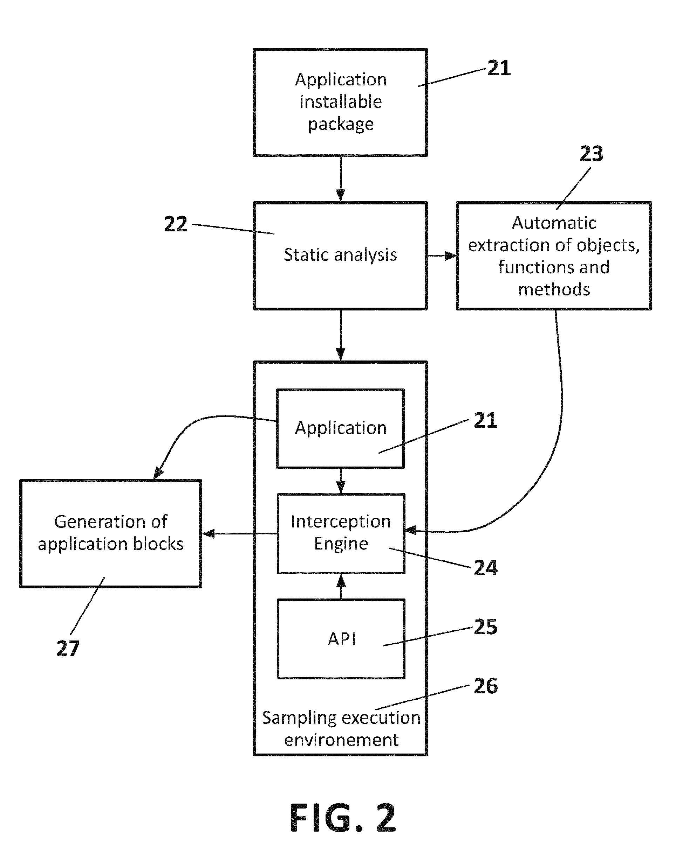

Focusing now on the offline step, a two-pass approach is used (as disclosed in figure 2):
First a static analysis (22) of the application (21) is performed, by running through the code of the application with parser and code analyzer. A list (23) of application elements is extracted; said application elements will be, for example, relevant objects and their methods (if object-based language has been used to write the application), and/or functions (if native code is used inside the application or, in other words, traditional function-based programming has been used in the application).
The application elements extracted will depend on the application programming language. For example, in Java, the application elements are mainly methods and objects and in C they are only functions. Said elements of the application will are grouped in application blocks that can be separated and run in different context, for example could be run on the mobile device, while some can be run in the cloud.
Second a dynamic analysis is performed. The list of elements (e.g. methods, functions and objects) previously extracted is used as a source of an interception module or engine (24). The interception module lays between the application code to be executed and the core API (25) of the platform where the application is supposed to be installed. The goal of the interception module is to detect and provide visibility on the API calls performed by the application during execution. Then the application (21) is executed and a simulated environment generates the necessary input to the application (during this simulated execution (26) the application blocks (27) that are resource consuming are identified).
   With this dynamic analysis a set of rules which defines the way the different application blocks interact between each other during execution and the resource usage of each application block is obtained. These rules are generated based on the usage of each resource by any API used by the application.
   So with the static analysis, the application elements are separated in application blocks but it is in the dynamic analysis where necessary information for the execution of said blocks is extracted: as the order of the execution of said application blocks and their interactions (and also their resource usage). Hence, with the static and dynamic analysis a set of interrelated application blocks (27) is generated.

By this two-pass approach, among others, two interesting results are obtained: First, the list of function names of the application obtained using static analysis may be used later during execution by replacing them on the fly (i.e., the application code may be replaced by a new one without rewriting the code of the application, and recompiling the application code).
Second, by running the application in the simulated or sampling environment, the way the function calls are interacting between them (or generally speaking, the way the application blocks are interacting between them) is obtained. Also it is obtained how particularly they act with the API responsible for the mobile device and network resources, such as the cellular mode, the Wifi module, sensors, the screen.... By running the application, a reverse call graph can be obtained, which map the resources to each block of the application.

So with the offline step, the application blocks are obtained (and the application blocks which are resource consuming are identified) and a set of rules regarding the behavior between the application blocks will be obtained (as schematically presented in figure 1).

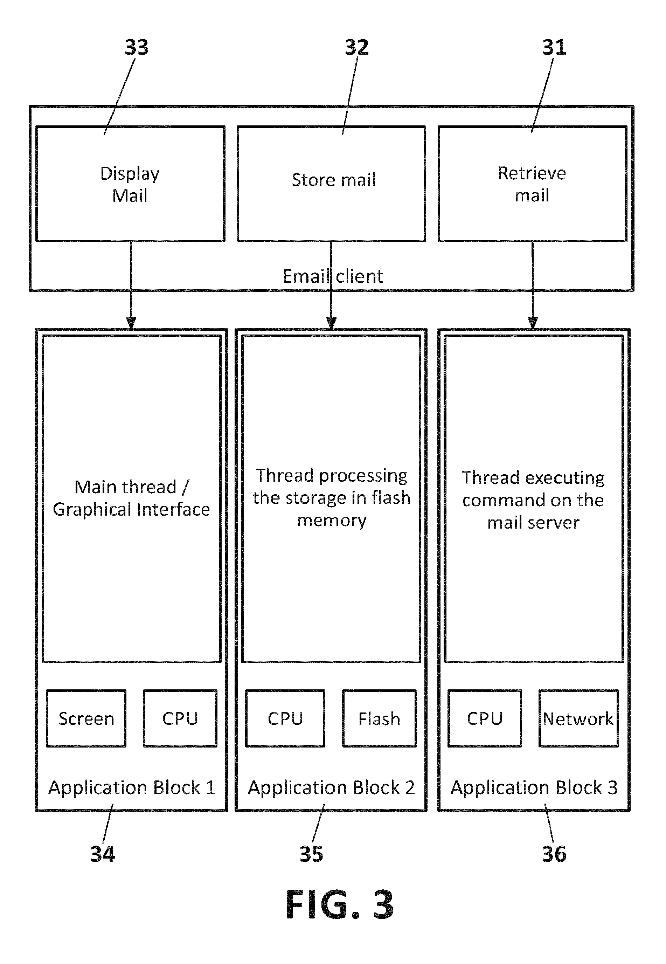

In order to better understand this offline step, a specific example is presented (as disclosed in figure 3). In this case the application will be an e-mail client. An email client is a networked application that uses a socket connection to reach a remote server, to interact with it and to obtain data which is then interpreted as an email (31); then this data is stored on the device (32) and displayed on the device of the end user (33). Eventually, a notification is provided to the end user under the form of an icon or a sound alert.

On an email client the offline analysis process should generate the following mapping of the application in application blocks:
- Application block 1 (34) will isolate all graphical functions. This block will use among others the following resources: CPU and screen.
- Application block 2 (35) will isolate all storage/processing. This block will use among others the following resources: CPU and flash memory.
- Application block 3 (36) will isolate all server interaction process (command execution on the mail server to retrieve or to send a mail). This block will use among others the following resources: CPU and network resources.

Hence, the static and dynamic analyses have enabled to obtain the functional blocks from a resource usage point of view. Also, they have enabled to automatically obtain a set of rules regarding the behavior between blocks.

Specific examples are now presented on the rules extracted for the interaction between the different application blocks and the different resources for different actions performed by the application.

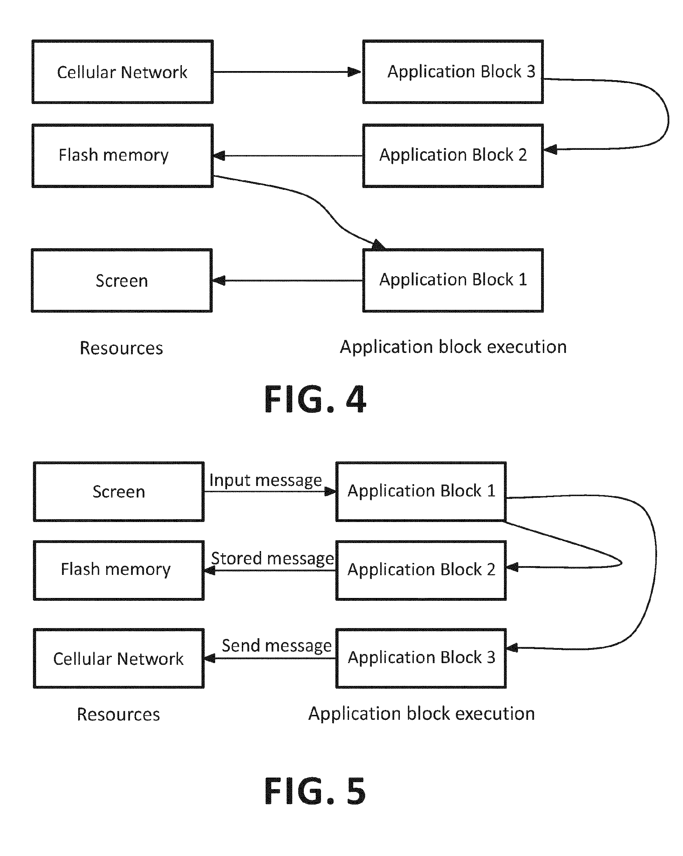

In the figure 4 it is illustrated the reception of an e-mail, showing the resources used at the left part of the figure and the application blocks executed at the right part. In this case, the network resource is the one initiating the application block 3 (retrieving on an e-mail) because the network tells the mobile device that there is an e-mail for the device and the application block 3 is executed to retrieve the e-mail; then, the application block 3 interacts with the storage unit (through application block 2) to store the mail in the flash memory and finally, the flash memory interacts with the application block 1 and the mail is shown to the end user at the screen.

In the figure 5 it is illustrated the action of sending of an e-mail, showing the resources used at the left part of the figure and the application blocks executed at the right part. In this case, the application block 1 is requested by the use of the application by the end user, Said application block generate two calls (interactions): one to the application block 2 which is responsible for storage (to store the mail in the flash memory) and another one to the application block 3, which interacts with the network to send the message over the network.

Now, another example will be presented, with a messaging like application such as Whatsapp. This application has a two modes operation: 1) an active mode where the user can read/write message; 2) an offline mode where the user is actually able to receive message in background. In that case, the application will have to be analyzed to isolate the application code responsible for this background operation.

Running the static and dynamic analysis explained before, an application with online presence such as Whatsapp can be decomposed in two application blocks and the rules for the interaction between its application blocks will be obtained. One block will be responsible for maintaining online presence (network keep-alive) which has a cost on the battery and one block will be responsible of all the messaging logic.

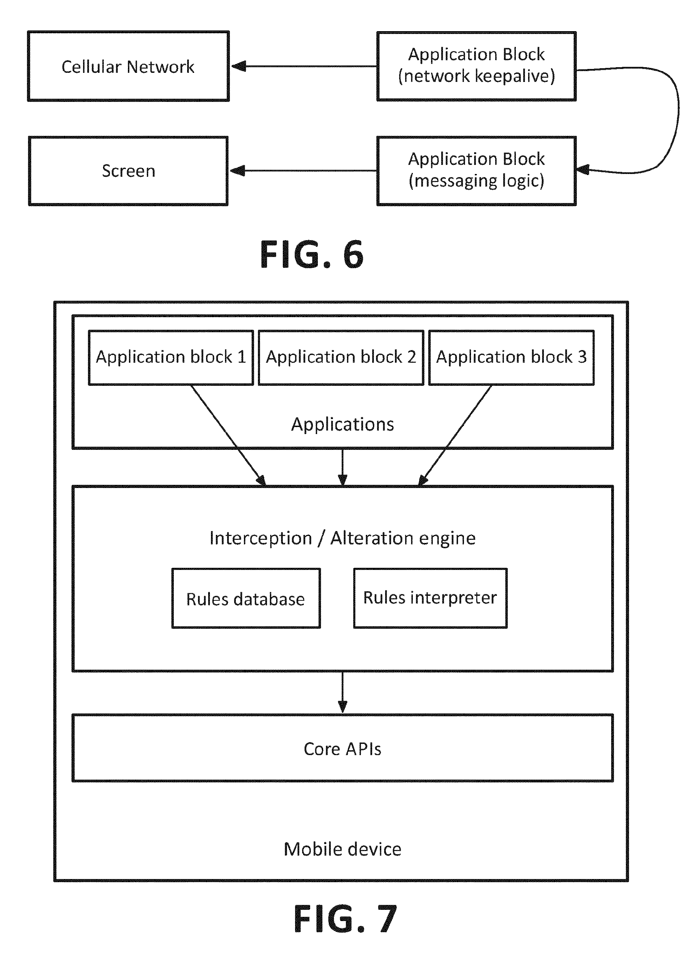

In the figure 6 it is illustrated the action of waiting for a new message in this example, showing the resources used at the left part of the figure and the application blocks executed at the right part. In this case, the first application block will interact with the network to maintain the online presence. Said application block will interact also with the block responsible of the messaging logic (for example, when receiving a message) and said block will interact with the screen to show the online presence to the user.
The application block responsible of the network keepalive is the one that will cause power consumption when the mobile device is idle. Finding automatically and isolating this block is the first step toward optimization of this application execution.

Summarizing, each application is defined with blocks (groups) of functions, methods, objects variables and in a more generic way, pieces of code, that can be opaquely run but rely on a clearly defined set of basic APIs and that have a imprint on the resources of the mobile device and on the network. It can be said, that the present invention is not interested in fine-grained instructions tracking but rather block-based.
Said application blocks will use API calls to interact with the different resources (network, mobile device CPU, mobile device screen...).

With the offline process, these application blocks and the appropriate interaction rule set will be obtained, to be later used by the online process in a lightweight way.

Now the online step will be explained. As shown in figure 1, this online step will achieve and optimization of the application execution by running, from the blocks defined in the offline step, some of them on the mobile device and some of them in the cloud (to save energy and resources and to make the execution process faster and more efficient).

To illustrate it the previous presented examples of the e-mail client and messaging application (e.g. whatsapp application) will be used.

For the standard email client (without an optimization of the application according to the present invention is not performed), the e-mail client application is running directly on the mobile device, send packets to the e-mail server, using the resource in a periodic way, even if no message is available (for example in the polling tasks to see if there is any e-mail for the mobile device).

If the email client application goes through the proposed offline analysis, each main task (displaying, processing user entry, processing network entry...) will be isolated just by watching the corresponding resource usage (Screen, CPU, Input, Network) based on the API used (all these APIs are normally public and clearly defined by the system provider). This enables to « decompose » the application in three application blocks (1. Graphical, 2. Storage and 3. Server) as disclosed before. Then, by continuing the analysis, we are able to identify the workflow between the different blocks.

A possible energy-efficient mapping for the application blocks will be to maintain application blocks 1 and 2 in the mobile device and application block 3 in the cloud interacting with the server. So, in this configuration, the application block responsible for connecting to the mail server is isolated in a cloud environment. This way, the polling has no impact on the energy (e.g. battery) consumption of the mobile device. It is considered that the mobile device is connected to the cloud through a unique, multiplexing link under strict network control.

When the mail client is polling for new message in the standard application, in terms of application block, only the application block 3 is actively running on the mobile phone in that precise case. Then, it is better to run the email client under the following model (running the application block 3 in the cloud) and running the application block 1 and 2 in the mobile device, with an associate rule set.

In this rule set, the system is very simple: if the application block 3 (network) wants to write to the application block1 (screen) then the communication to the mobile device is performed, otherwise not. This minimizes the communication costs of the mobile phone and enables to receive mail without any energy cost (in terms of data transactions between the mobile device and the server) associated to the polling of the mail server.

In the case of the messaging app, in the offline process two active application blocks has been identified: a network keep alive block (resource consuming when the application in background) and an application logic block (active only when the application is in use).

Now the online process will be used to remap (to distribute) the application blocks into a cloud infrastructure or into the mobile device. A possible energy-efficient mapping for the application blocks will be to maintain application block 1 (network keep alive block) in the cloud interacting with the messaging server and application block 2 (application logic block) in the mobile device interacting with the mobile device resources (for example with the screen) to show the message to the end user. In this configuration, all the energy and resources spent in the keepalive function is isolated in the cloud. The application is still warned about new incoming messages using the network link between the mobile device and the cloud which is under network control.

This first step (the offline step: analysis and generation of blocks + set of rules) needs to be only run when a new application is available for download by the final user. It is done in the cloud, where power and analysis can be refined using powerful techniques of code analysis with large computational resources.

The offline and online steps have not to be performed for each user (each mobile device) of the present invention, but said steps only have to be performed once for each application, and then all the users can apply the results of said offline and online steps to benefit from the invention. Now it is going to be explained how the results of the offline and online steps will be applied to the users. To this purpose, the component of the offline analysis called interception is reused (basically intercepting the call of the original application and imposing the set of rules we have generated in the set earlier).

The concept of the interception is explained in figure 7. On the mobile device, the interception engine is simply interpreting the application blocks previously defined by the offline analysis. Then, using the rule set that defines the relationship between blocks (obtained also in the offline step), it is easy for the interception engine to inject the result of the remote execution in the cloud of some particular application block. In other words, using the rules which define the application blocks interactions, when an application block is executed in the cloud (for example the application block 3 in the case of the e-mail client) the result of the execution of said application block is appropriately injected in the mobile device so the whole application is correctly executed (with the same overall result as if all the application blocks were executed in the mobile device as it is done in the standard application). This way, it can be said that a transparent cooperative execution of the application is made between the cloud and the mobile device.

Taking again the email client example (in order to better explain the interception process), it has been found out that executing the application block 3 in the cloud was a better choice in terms of resource utilization (usually the most consuming application block is executed in the cloud). There will be two interceptor functions (one run in the mobile device and one run in the cloud infrastructure) and a network controlled optimized link will be used to exchange data between two instance of the interceptor.

In the interception module, each application is decomposed in the application blocks previously defined in the offline and online part of the invention. Each application block has a set of API calls to the core API, provided by the mobile device. According to the rules database, the rule interpreter will give instruction to the interception engine in order to intercept or alter the execution on a per application block basis, so the calls to functions which are in an application block which is executed in the cloud will be send to the cloud for execution. This enables 1) efficient alteration of existing application without code rewrite 2) distribution of the execution between the cloud and the final device.

In the same way, an interception engine in the cloud will intercept or alter the execution on a per application block basis, so the calls to functions which are in an application block which is executed in the mobile device will be send to the mobile device for execution. It enables the cloud environment to 1) emulate the missing variables that the block might need to interact 2) support the recovery and the delivery of the output of the processing done by each block.

This interception engine is enabled by the fact that mobile applications are written in language that is dynamically interpreted or presenting dynamic symbols resolution at the execution time. During these interpretation or resolution, performed on the device itself during the execution, one can tap in the execution flow and use the interception engine to alter the execution flow (e.g. redirecting function calls) and apply any rule before calling the rightful API.

Summarizing, it is just needed to isolate the most resource consuming methods and objects and group them under application blocks (run in the cloud). Then the output of each block is sent to another block following the rule set, which has been obtained previously during the offline phase. The interceptors module (engines) are interconnected to enable them to share the result of the distributed computation (of the application blocks executed in the mobile device and the application blocks executed in the cloud).

In the cloud, the application blocks can run in a virtual environment that provides and emulates the necessary variables and memory objects necessary for proper application execution. This is a possible thanks to the previous application offline defining step performed previously where each application block and the rules governing the interactions between the blocks are defined.

A single application block can be implemented in the cloud for multiple end users, enabling true scalability, where solutions based on cloning or migration are involving large piece of code.

In other words, several mobile devices might be sharing the same application block (piece of code) under different instances. These instances of the same code might be isolated under different security isolation mechanisms as they only should share the application block code part from the application, not the actual variables and current content of the objects. This prevents any breach of security between different users, providing a solid mechanism of isolation is provided, such as jail or user privilege-based execution.
For example, in the example of the e-mail client, different end users could be sharing the application block 3 (mail server) in the cloud.

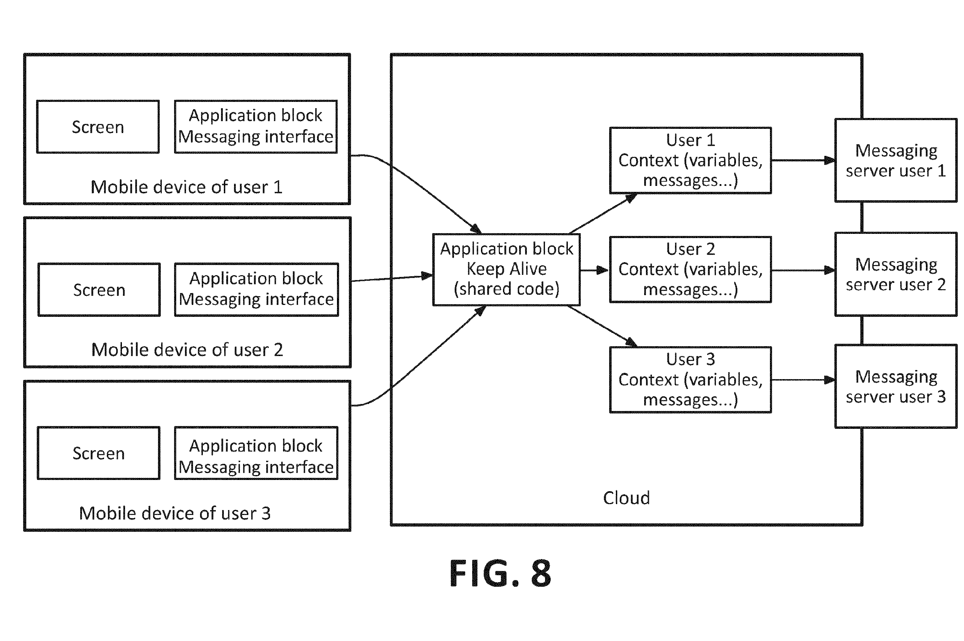

Now, an example of the sharing of the application blocks in the cloud by different end users will be illustrated (figure 8) taking the case of the execution of a messaging application (e.g. whatsapp) previously explained.

As previously explained, the messaging application was divided in two application blocks, the messaging logic block (to be executed in the mobile device) and the keep alive block (to be executed in the cloud). In the example shown in figure 8, 3 users (1, 2 and 3) using each one a mobile devices. Each mobile device will have the messaging logic block implemented in it and they will share the keep alive block in the cloud.

In this scenario, the keep alive block will be a single piece of code, run over multiple user instances. Each user will have its isolated user context (with their own variables, messages ...) appropriately isolated to avoid any security breach between them. This enables to scale the execution of a single block toward multiples users, as only the context execution has to be tailored for each user. The keep-alive application block code is shared, and can be optimized in terms of deployment. For example, a single machine can be used to host all the user instances of a single provider (example: one machine for whatsapp related connections, one for Viber, one for line) enabling network optimization scheme in the core network.

A person skilled in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.
The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.
The functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.
It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method for optimizing resources usage during the execution of an application to be used in a mobile device, the mobile device being connected, through a communications link, with a communications network using cloud computing, the method comprising:
a) Analyzing the application code to identify the application elements and grouping said application elements in several functional application blocks, each functional application block being able to be executed separately from other functional application blocks,
b) Obtaining a set of rules defining the interactions between the functional application blocks and the resource usage of each application block,
c) Based at least partially on the set of rules, determining a first group of at least one functional application block to be executed by network nodes and a second group of at least one functional application block to be executed by the mobile device in order to optimize the resources usage,
d) Executing the application by executing the functional application blocks of the first group in the network nodes and executing the functional application blocks of the second group in the mobile device.

2. The method according to any of the previous claims where in step c) the most resource consuming application blocks are assigned to the first group.

3. The method according to any of the previous claims where the steps a) and b) are performed by a node of the communications network.

4. The method according to any of the previous claims where step d) comprises:
- when, according to the set of rules, the result of the execution of one of the application blocks being executed by a network node is needed as an input for the execution of an application block of the second group, sending said result from the network node to the mobile device through the communications link and
- when, according to the set of rules, the result of the execution of one of the application blocks being executed by the mobile terminal node is needed as an input for the execution of an application block of the first group, sending said result from the mobile device to the communications network through the communications link

5. The method according to any of the previous claims where step d) comprises :
when, according to the set of rules, a certain application block to be executed in the mobile device includes a call to a function which belongs to another application block to be executed in a network node, when executing said certain application block in the mobile device, intercepting said function call and sending said function call to the communications network through the communications link for execution.

6. The method according to any of the previous claims where step d) comprises :
when, according to the set of rules, a certain application block to be executed in a network node includes a call to a function which belongs to another application block to be executed in the mobile device, when executing said certain application block in the network node, intercepting said function call and sending said function call to the mobile device through the communications link for execution.

7. The method according to any of the previous claims 5-6 where said call to a functions is an Application Programming Interface, API, call.

8. The method according to any of the previous claims where in step b), the set of rules is obtained by executing the application in a simulated environment.

9. The method according to any of the previous claims where the determination in step c) is also based in rules predefined by an user of the mobile device or by a network provider.

10. The method according to any of the previous claims where an application block executed in the communications network is shared by several mobile devices, each mobile device with a different mobile device user context.

11. The method according to any of the previous claims where said application elements are at least one of the following: functions, objects and variables used by the application when being executed.

12. A system for optimizing resources usage during the execution of an application to be used in a mobile device, the mobile device being connected, through a communications link, with a communications network using cloud computing, the system comprising:
a first network-based processor configured to:
- analyze the application code to identify the application elements,
- group said application elements in several functional application blocks, each application block being able to be executed separately from other application blocks
- obtain a set of rules defining the interactions between the application blocks and the resource usage of each application block,
- based at least partially in the set of rules, determine a first group of at least one application block to be executed in the communications network and a second group of at least one application block to be executed in the mobile device in order to optimize the resources usage,
at least a second network-based processor in a second communications network node configured to execute functional application blocks assigned to the first group and
a mobile device comprising a processor configured to execute the functional application blocks assigned to the second group.

13. The system of claim 12 where the second network-based processor is further configured to:
- when, according to the set of rules, a certain application block assigned to the first group includes a call to a function which belongs to another application block of the second group, when executing the certain application block, the second network-based processor is configured to intercept said function call and to send said function call to the mobile device through the communications link for execution,
- when, according to the set of rules, the result of the execution of one of the application blocks of the first group is needed as an input for the execution of an application block of the second group, the second network-based processor is configured to send said result to the mobile device through the communications link,
and the mobile device processor is further configured to:
- when, according to the set of rules, a certain application block assigned to the second group includes a call to a function which belongs to another application block of the first group, when executing the certain application block in the mobile device, the mobile device processor is configured to intercept said function call and to send said function call to the communications network through the communications link for execution,
- when, according to the set of rules, the result of the execution of one of the application blocks being executed by the mobile device is needed as an input for the execution of an application block of the first group, the mobile device processor is configured to send said result from the mobile device to the communications network node through the communications link.

14. A mobile device for optimizing resources usage during the execution of an application to be used by the mobile device, the mobile device being connected, through a communications link, with a communications network using cloud computing, where the application has been divided in several functional applications block, a set of rules defines the interactions between the application blocks and the resource usage of each application block and a first group of at least one application block is to be executed in the communications network and a second group of at least one application block is to be executed in the mobile device, the mobile device comprising:
A processor configured to execute the functional application blocks assigned to the second group and where:
- when, according to the set of rules, a certain application block assigned to the second group includes a call to a function which belongs to another application block of the first group, when executing the certain application block in the mobile device, the processor is configured to intercept said function call and to send said function call to the communications network through the communications link for execution,
- when, according to the set of rules, the result of the execution of one of the application blocks being executed by the mobile device is needed as an input for the execution of an application block of the first group, the processor is configured to send said result from the mobile device to the communications network through the communications link.

15. A computer program product comprising computer-executable instructions for performing the method according to any of the claims 1-11, when the program is run on a computer.
